# EUROPÄISCHE PATENTSCHRIFT

(11) **EP 0 802 240 B1**
(45) Veröffentlichungstag und Bekanntmachung des Hinweises auf die Patenterteilung: **04.09.2002**
(21) Anmeldenummer: 97105718.7
(22) Anmeldetag: 07.04.1997
(51) Int. Cl.: C09B 67/54, C09B 67/26, C09B 33/056, D21H 21/28, C09B 33/28

(54) **Verfahren zur Herstellung salzarmer, flüssiger Farbstoffpräparationen**
Process for the manufacture of liquid dyestuff preparations with a low salt content
Procédé de fabrication de préparations tinctoriales liquides à faible teneur en sel

(30) Priorität: 18.04.1996 DE 19615260
(43) Veröffentlichungstag der Anmeldung: 22.10.1997
(73) Patentinhaber: BAYER AG, 51368 Leverkusen (DE)
(72) Erfinder: Wild, Peter, Dr., 51519 Odenthal (DE); Paulat, Volker, Dr., 25709 Marne (DE); Frank, Wolfgang, Dr., 50937 Köln (DE); Murphree, Shaun, Dr., Sommerville, SC 29485 (US)

(56) Entgegenhaltungen:
- EP-A- 0 033 852
- EP-A- 0 059 782
- EP-A- 0 288 434
- DE-A- 2 103 756
- DE-A- 2 103 757
- FR-A- 2 124 359
- US-A- 1 509 442

## Beschreibung

Die Erfindung betrifft ein Verfahren zur Herstellung salzarmer, flüssiger Farbstoffpräparationen von auf I-Säure-Harnstoff basierenden Farbstoffen sowie die Verwendung so hergestellter flüssiger Farbstoffpräparationen zum Färben und Bedrucken hydroxyl- und/oder amidgruppenhaltiger Substrate, insbesondere Papier.

Aus DE-A-30 02 062 ist bereits bekannt, dass auf I-Säure-Harnstoff basierende Farbstoffe zum Färben von Papier verwendet werden können. In Form ihrer flüssigen Farbstoffpräparationen werden jedoch lediglich solche Farbstoffe eingesetzt, die entweder auf dem Wege der simultanen Kupplung (diazotierende Kupplung) hergestellt werden oder solche, deren Azokupplung in Gegenwart von Diethanolamin erfolgt ist. Die so hergestellten Farbstoffe fallen jedoch in geringer Ausbeute an (Bsp. 2, 83 % d.Th.; Bsp. 3, 93 % d.Th). In Form ihrer flüssigen Präparationen besitzen sie zudem eine geringe Lagerstabilität (s.Bsp. 3). Außerdem weisen die so hergestellten Farbstoffe substantielle Anteile an Nebenprodukten auf, die in der Präparation verbleiben und die Qualität des Farbstoffs hinsichtlich seiner Brillanz beeinträchtigen. Auf anderem Wege hergestellte auf I-Säure-Harnstoff basierende Farbstoffe werden dagegen ausschließlich in Form ihrer festen Präparationen verwendet (siehe Beispiel 1).

Die aus DE-A-21 03 756 bekannten auf I-Säure-Harnstoff basierenden Farbstoffe werden ebenfalls sowohl in Form ihrer festen als auch in Form ihrer flüssigen Präparationen zum Färben von Papier eingesetzt. Die Farbstoffpräparationen enthalten in Wasser dissoziierbare Salze, wobei die flüssigen Farbstoffpräparationen zusätzlich auf ein Teil Farbstoff 0,5 bis 5 Gew.-Teile eines Säureamids, vorzugsweise Harnstoff, enthalten.

Die aus DE-A-29 02 034 bekannten flüssigen Farbstoffpräparationen von Farbstoffen mit I-Säure-Harnstoff als Kupplungskomponente werden stets aus den festen Farbstoffpräparationen hergestellt, besitzen einen pH-Wert von größer als 12 und enthalten hydrotrope Mittel.

Auch aus US-A-1 509 442 sind solche Farbstoffe bekannt, die jedoch ausschließlich in Form ihrer salzhaltigen festen Präparation zum Färben eingesetzt werden.

Die Erfindung betrifft salzarme wässrige Farbstoffpräparationen mit einem anorganischen Salzgehalt von kleiner 1 Gew.-% und einem Gehalt an hydrotropen Mitteln von kleiner 10 Gew.-%, insbesondere kleiner 5 Gew.-%, jeweils bezogen auf die Gesamtmenge der Präparation, enthaltend einen Farbstoff, der in Form seiner freien Säure der Formel (II) entspricht.

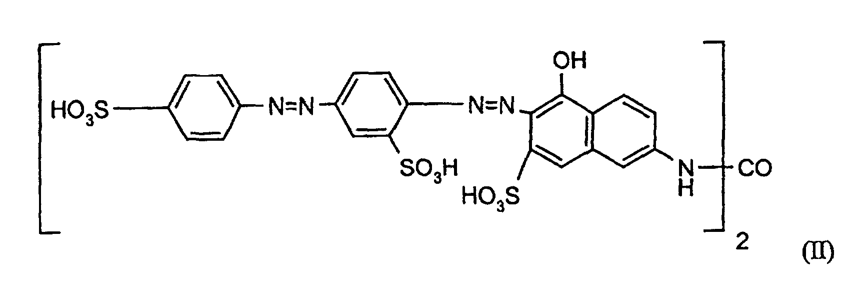

Die erfindungsgemäßen flüssigen Farbstoffpräparationen enthalten vorzugsweise keine hydrotropen Mittel. Unter hydrotropen Mitteln sind löslichkeitsverbessernde Zusätze zu verstehen. Beispielhaft können als hydrotrope Mittel die folgenden genannt werden: niedermolekulare Amide, Laktone, Alkohole, Glykole oder Polyole, niedermolekulare Ether oder Oxalkylierungsprodukte sowie Nitrile oder Ester. Unter hydrotropen Mitteln werden insbesondere verstanden: Methanol, Ethanol, Propanol, Ethylen-, Propylen-, Diethylen-, Thiodiethylen- und Dipropylenglykol sowie Triethylenglykol; Butandiol; ß-Hydroxypropionitril, Pentamethylenglykol, Ethylenglykolmonoethyl- und -propylether, Ethylendiglykolmonoethylether, Triethylenglykolmonobutylether, Butylpolyglykol, Formamid, Dimethylformamid, Pyrrolidon, N-Methylpyrrolidon, Glykolacetat, Butyrolakton, Harnstoff und ε-Caprolactam. Besonders bevorzugt enthalten sie als wesentliche Bestandteile lediglich den Farbstoff in Form seiner Alkali- (oder Ammonium)-Salze und Wasser. Der Farbstoff liegt vorzugsweise als Alkali-, insbesondere Na-, Li- oder K-Salz, insbesondere als Na-Salz vor. Die Farbstoffpräparationen können auch noch Zusätze wie beispielsweise Diethanolamin enthalten. Die flüssige Farbstoffpräparation besitzt vorzugsweise einen pH von 6 bis 8, der sofern nötig mit Alkali eingestellt wird. Die erfindungsgemäße flüssige Farbstoffpräparation enthält vorzugsweise den Farbstoff in einer Menge von 5 bis 20 Gew.-%, vorzugsweise 8 bis 13 Gew.-% in Form seines Alkalisalzes. Selbst bei hohen Farbstoffkonzentrationen sind keine hydrotropen Mittel erforderlich, um lagerstabile Präparationen zu erhalten. Die erfindungsgemäßen Farbstoffpräparationen zeichnen sich durch eine besonders hohe Reinheit und eine sehr gute Lagerstabilität aus.

Bevorzugt enthält die wässrige Farbstoffpräparation, enthaltend den Farbstoff der Formel (II) keine hydrotropen Mittel. Der Farbstoff der Formel (II) liegt vorzugsweise in Form seines Alkalisalzes vor.

Die Erfindung betrifft weiterhin ein Verfahren zur Herstellung der erfindungsgemäßen salzarmen flüssigen Farbstoffpräparationen, das dadurch gekennzeichnet ist, dass die Farbstoffpräparation erhalten wird durch:
a) Diazotierung eines aromatischen Amins der Formel (1) 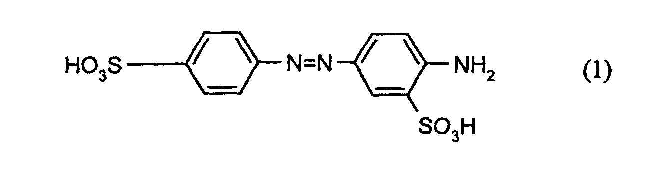
b) 2-fache Kupplung der nach a) erhaltenen Diazokomponente auf I-Säure-Harnstoff, in Gegenwart einer anorganischen Base und Abwesenheit einer organischen Base,
c) Entsalzung und gegebenenfalls Aufkonzentrierung mittels Druckpermeation, der nach b) erhaltenen Reaktionsmischung, so dass ein anorganischer Salzgehalt von kleiner 1 Gew.-%, bezogen auf die flüssige Farbstoffpräparation, erreicht wird.

Die Diazotierung wird im allgemeinen nach den allgemeinen Verfahren durchgeführt (vgl.: Houben-Weyl: Methoden der anorganischen Chemie Band X/3, Jahrgang 1965, Auflage 4, Seite 7-112 sowie Band Elba, Teil 2, Jahrgang 1990, Auflage 4, S. 1060-1068). Vorzugsweise erfolgt die Diazotierung nach der indirekten Methode, wobei eine wässrige Lösung von einem Nitritsalz zu einer Vorlage von einem Arylamin, vorzugsweise einem sulfierten oder carboxylierten Arylamin, bzw. dessen Alkalisalz und überschüssige Säure bei 0°C bis 40°C, vorzugsweise bei 10 bis 25°C, zugegeben werden. Weiterhin bevorzugt ist die Diazotierung nach der direkten Methode, wobei vorzugsweise eine wässrige Mischung von einem Arylamin, vorzugsweise einem sulfierten oder carboxylierten Arylamin, bzw. dessen Alkalisalz und einem anorganischen Nitritsalz zu einer wässrigen Vorlage von überschüssige anorganischer Säure bei einer Temperatur von 0 bis 40°C, vorzugsweise 10 bis 25°C, zugegeben werden.

Als bevorzugte Diazotierungsmittel sind NaNO₂, LiNO₂ oder Nitrosylschwefelsäure zu nennen. Besonders bevorzugt ist NaNO₂.

Die nach der Diazotierung erhaltene Lösung bzw. Suspension wird im allgemeinen wie nachfolgend beschrieben zur Kupplung auf I-Säure-Hamstoff eingesetzt. Die zweifache Kupplung auf I-Säure-Harnstoff wird vorzugsweise dadurch realisiert, dass das Verhältnis von Diazokomponente zu Kupplungskomponente 2:1 bis 2,5:1 beträgt.

I-Säure-Harnstoff besitzt die allgemeine Formel

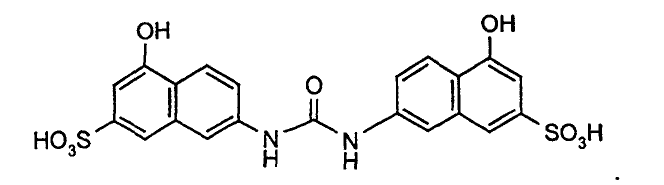

Die Kupplung wird im allgemeinen unter bekannten Bedingungen, wie sie beispielsweise aus DE-A 21 03 756, DE-A-2 103 757 und US-A-2 746 955 bekannt sind, durchgeführt.

Bevorzugt erfolgt die Kupplung so, dass die Diazokomponente zu der Kupplungskomponente zugegeben wird, wobei der pH-Wert der Kupplung im allgemeinen bei 5-10, vorzugsweise bei 6-8,5, mit der Zugabe von einer anorganischen Base gehalten wird.

Als besonders bevorzugte Basen kommen Alkalimetallhydroxide, -carbonate, hydrogencarbonate oder Acetate in Frage. Als Alkalimetall ist Natrium oder Lithium bevorzugt.

Die nach beendeter Kupplung erhaltene Reaktionsmischung wird dann vorzugsweise bei einer Temperatur von 15-55°C druckpermeiert. Dabei wird insbesondere eine Ultrafiltrationsmembran mit einem cut-off-level von 1000-1500 Dalton eingesetzt. Bevorzugte Ultrafiltrationsmembranen sind solche aus Polysulfonen. Die Druckpermeration erfolgt vorzugsweise bei 10-50 bar, insbesondere 20-40 bar. Die Druckpermation wird bis zu einem Salzgehalt von weniger als 1% durchgeführt, wobei der Salzgehalt vorzugsweise als Chloridgehalt ermittelt wird. Bei der Druckpermeation wird diafiltriert und gegebenenfalls aufkonzentriert, wobei die Diafiltration einer möglichen Aufkonzentration vor- oder nachgeschaltet werden kann.

Die Erfindung betrifft weiterhin ein Verfahren zum Färben oder Bedrucken von hydroxyl- und/oder amidgruppenhaltigen Substraten unter Verwendung der erfindungsgemäßen flüssigen Farbstoffpräparation enthaltend den Farbstoff der Formel (II). Unter hydroxyl- und/oder amidgruppenhaltigen Substraten werden insbesondere Papier, Baumwolle und Viskose sowie Leder verstanden.

Die flüssigen Farbstoffpräparationen können nach allen in der Papier- und Textilindustrie für substantive Farbstoffe gebräuchlichen Verfahren verwendet werden, insbesondere in der Massen- sowie in der Oberflächenfärbung von Papier für geleimte oder ungeleimte Sorten, ausgehend von gebleichtem oder ungebleichtem Zellstoff verschiedener Provenienz wie Nadel- oder Laufholz-Sulfit- und/oder Sulfat-Zellstoff. Sie können auch in Garn- und Stückfärberei von Baumwolle, Viskose und Leinen nach dem Ausziehverfahren als langer Flotte oder im Kontinueverfahren angewandt werden.

### Beispiele

### Beispiel 1

Verfahren zur Herstellung des Farbstoffs der Formel (II)

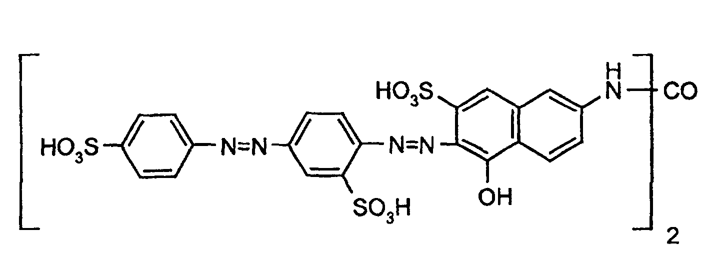

0,91 Mol 2-Sulfo-4-[(1-sulfophenyl)azo]anilin (Digelbsäure) wurden in 1,4l enthärtetes Wasser eingetragen und mit 1,2 Mol Salzsäure versetzt. Im Laufe von ca. 30 min wurde 210 ml Natriumnitrit-Lösung (300 g/l) bei 10-20°C zugegeben. Die so erhaltene Suspension von diazotierter Digelbsäure wurde 1 Std. bei 20°C unter Nitritüberschuß nachgerührt. Überschüßiges Nitrit wurde dann mit der Zugabe von ca. 0,05 Mol Amidosulfonsäure vernichtet.

Zu dieser Suspension wurde eine Anschlämmung von 0,43 Mol N,N'-bis[1-Hydroxy-3-sulfo-6-naphthyl]harnstoff (I-Säure-Harnstoff) in 500 ml enthärtetes Wasser zugegeben. Die gesamte Mischung wurde im Laufe von 1 Std zu einer Vorlage von 0,10 Mol Dinatriumhydrogenphosphat, 330 g von einem Naphthalinsulfonsäure/Formaldehyd-Kondensat, und 800 ml enthärtetem Wasser bei 30°C zugegeben, wobei der pH-Wert auf 7,5 durch Zugabe von ca. 800 ml Natriumcarbonat-Lösung (200 g/l) gehalten wurde.

0,09 Mol Digelbsäure wurde analog der ersten Diazotierung diazotiert (Volumen = ca. 700 ml) und dann zu der Kupplung bei 30°C zugegeben, wobei der pH-Wert bei 8,5 durch Zugabe von ca. 200ml Natriumhydroxid-Lösung (400 g/l) gehalten wurde. Ausbeute 84 % d.Th., bezogen auf I-Säure-Harnstoff.

Zur Druckpermeation wurde der so erhaltene Farbstoff über eine Polysulfonmembran (MWCO 1.000-1.500) bei 25°C und 40 bar erst auf einem Gesamtvolumen von ca. 4,5 l aufkonzentriert und dann mit ca. 7 deionisiertem Wasser diafiltriert. Man erhielt 4.510 g einer lagerstabilen Farbstofflösung (Cl⁻ = 0,08 %) mit einem pH-Wert von 8,5. Verwendete man die Farbstofflösung zum Massefärben von Papier, so erhielt man brillante Färbungen.

## Patentansprüche

1. Wässrige Farbstoffpräparationen mit einem anorganischen Salzgehalt von kleiner 1 Gew.-% und einem Gehalt an hydrotropen Mitteln von kleiner 10 Gew.-%, jeweils bezogen auf die Gesamtmenge der Präparation, enthaltend einen Farbstoff, der in Form seiner freien Säure der Formel (II) entspricht

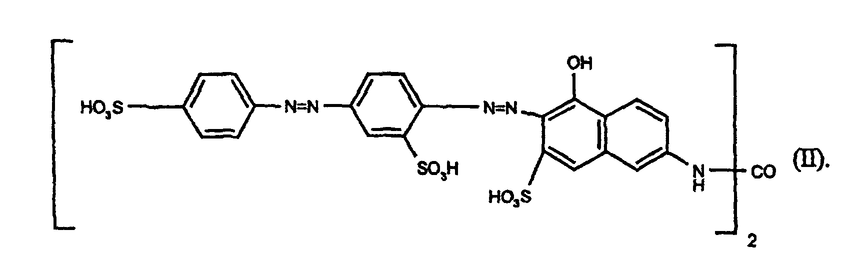

2. Wässrige Farbstoffpräparation gemäß Anspruch 1, **dadurch gekennzeichnet, dass** sie 5 bis 20 Gew.-% des Farbstoffes der Formel II in Form seines Alkalisalzes enthält.

3. Verfahren zur Herstellung von flüssigen Farbstoffpräparationen gemäß Anspruch 1, **dadurch gekennzeichnet, daß** sie erhalten werden durch:
a) Diazotierung eines aromatischen Amins,
b) 2-fache Kupplung der nach a) erhaltenen Diazokomponente auf I-Säure-Harnstoff, in Gegenwart einer anorganischen Base und in Abwesenheit einer organischen Base,
c) Entsalzung und gegebenenfalls Aufkonzentrierung mittels Druckpermeation, der nach b) erhaltenen Reaktionsmischung, so daß ein anorganischer Salzgehalt von kleiner 1 Gew.-%, bezogen auf die flüssige Farbstoffpräparation, erreicht wird.

4. Verfahren zum Färben und Bedrucken von hydroxyl- und/oder amidgruppenhaltigen Substraten unter Verwendung der flüssigen Farbstoffpräparation nach Anspruch 1.

5. Verfahren gemäß Anspruch 4 zum Färben oder Bedrucken von Papier.

## Claims

1. Aqueous dyestuff preparations with an inorganic salt content of less than 1% by weight and a content of hydrotropic agents of less than 10% by weight, in each case based on the total amount of the preparation, comprising a dyestuff which, in the form of its free acid, corresponds to the formula (II)

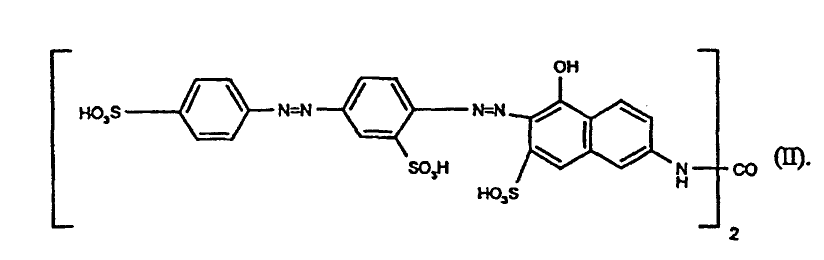

2. Aqueous dyestuff preparation according to Claim 1, **characterized in that** it comprises 5 to 20% by weight of the dyestuff of the formula II in the form of its alkali metal salt.

3. Process for the preparation of liquid dyestuff preparations according to Claim 1, **characterized in that** they are obtained by:
a) diazotization of an aromatic amine,
b) 2-fold coupling of the diazo component obtained according to a) to J-acid-urea, in the presence of an inorganic base and in the absence of an organic base,
c) desalination and, if appropriate, concentration by means of a pressure permeation of the reaction mixture obtained according to b), so that an inorganic salt content of less than 1% by weight, based on the liquid dyestuff preparation, is achieved.

4. Process for dyeing and printing substrates containing hydroxyl and/or amide groups using the liquid dyestuff preparation according to Claim 1.

5. Process according to Claim 4 for dyeing or printing paper.

## Revendications

1. Composition tinctoriale aqueuse à une teneur en sels minéraux inférieure à 1 % en poids et une teneur en produits hydrotropes inférieure à 10 % en poids, dans les deux cas sur le poids total de la composition, cette composition contenant un colorant qui, à l'état d'acide libre, répond à la formule (II)

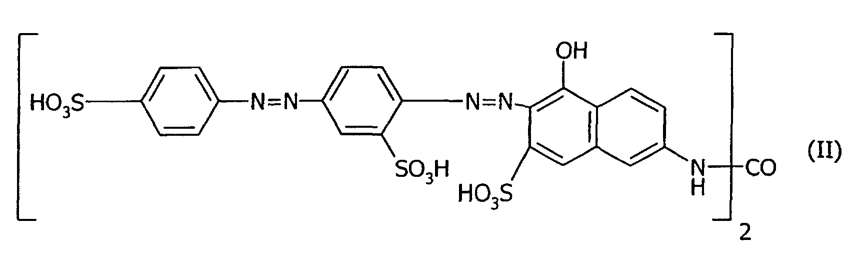

2. Composition tinctoriale aqueuse selon la revendication 1, **caractérisée en ce qu'**elle contient de 2 à 20 % en poids du colorant de formule (II) à l'état de sel alcalin.

3. Procédé pour la préparation de compositions tinctoriales liquides selon la revendication 1, **caractérisé en ce qu'**on les obtient de la manière suivante :
a) on diazote une amine aromatique,
b) on copule 2 fois le diazo obtenu en a) sur l'urée d'acide I en présence d'une base minérale mais en l'absence d'une base organique,
c) on élimine les sels et le cas échéant, on concentre par perméation sous pression du mélange de réaction obtenu en b) jusqu'à une teneur en sels minéraux inférieure à 1 % du poids de la composition tinctoriale liquide.

4. Procédé pour la coloration et l'impression de substrats contenant des groupes hydroxy et/ou amide à l'aide de la composition tinctoriale liquide selon la revendication 1.

5. Procédé selon la revendication 4, pour la coloration ou l'impression du papier.
